# EUROPEAN PATENT APPLICATION

(11) **EP 0 717 284 A1**
(43) Date of publication of application: **19.06.1996**
(21) Application number: 95308986.9
(22) Date of filing: 11.12.1995
(51) Int. Cl.: G01N 35/00

(54) **Chain incubator/conveyor and method of use**

(30) Priority: 12.12.1994 US 354683
(71) Applicant: JOHNSON & JOHNSON CLINICAL DIAGNOSTICS, INC., Rochester, New York 14650-0880 (US)
(72) Inventor: Shaw, James David, Hilton, New York 14468 (US)
(74) Representative: Mercer, Christopher Paul

(57) **Abstract**

A chain incubator or conveyor, and method of use in an analyzer, wherein an endless chain is formed of repeating members and each comprising a link, element support, a cover, and means for biasing the cover onto the support with an article such as a test element between them. The members are linked together by a pair of pivot pins, and the chain is engaged by a drive sprocket and an idler sprocket.

## Description

The invention relates to a novel incubator or conveyor of particular use in an analyzer, to achieve improved throughput.

Incubators of chemical analyzers come in various forms, the most common of which is a horizontally disposed platform, such as a rotor, on which test elements are placed at stations and stored at controlled temperatures until they are ready for reading. Such rotor incubators do at least minimize the time needed to access any station, given that the stations are in the form of an endless loop that can be accessed without going all the way to an "end". Minimal access time is an important factor in high throughput.

The problem however is that such a construction is limited nevertheless as to throughput. Although more stations can be added by enlarging the circumference, it is not usually feasible to add concentric rows of stations inside the outermost row. One approach is to add another rotor, thereby generally doubling the throughput. However, if a 60 cm diameter rotor has only 54 stations around its circumference, this means that 2827 cm² are occupied by the footprint of the rotor to handle only 54 test elements at a time, or twice this when using two stacked rotors. The problem then of the invention has been to provide a more useful design in an endless loop form that occupies the same approximate volume of a 2827 cm² or less area, but which has at least twice as many stations thereon.

US-A-4,119,381 does describe an incubator using a rotor in which the flow of the stations and the supporting platforms is in the vertical, rather than the horizontal, dimension. However, the incubator of that patent is functionally equivalent to rotors now disposed horizontally, which is simply rotated 90° to move through a vertical plane rather than a horizontal plane. By retaining the rotor format, it is limited in its packing density by the same limitations provided in horizontally-disposed rotors.

Commonly owned US-A-5,419,871 entitled Twin Rotor Elevator Assay describes an elevator, FIG. 15, for moving plural test elements to rotor incubators stacked at various levels. Although it is not shown, at a given time there may be test elements disposed in two elevator stations at a given time. However, the stations are not stacked vertically together, nor does this provide the advantages of the instant invention.

I have constructed an incubator/conveyor and a method of processing test elements that solves the noted problems.

More specifically, in accord with one aspect of the invention, there is provided an incubator for a chemical analyzer, comprising
a plurality of test element supports vertically joined together in a stacked assembly, the assembly comprising at least a pair of opposed pivot points attached to each of the supports and at least one pivot pin, the pivot pin passing through and joining a pivot point of one support to a pivot point of an adjacent support,
and means for moving the stack in a vertical direction.

In accord with another aspect of the invention, there is provided in an endless chain conveyor comprising a plurality of links pivotally connected to each other at opposite ends by pins, a drive sprocket and an idler sprocket each having teeth spaced and spaced to engage the links, and an article support projecting from each of the links. The conveyor is improved in that the conveyor further includes for each of the links, a cover movably positioned over each support, and biasing means for removably biasing the cover against each support, and wherein the sprockets are disposed one above the other so that the supports are oriented generally horizontally except when their respective links engage the sprockets.

In accord with yet another aspect of the invention, there is provided an incubator for a chemical analyzer, comprising
a plurality of test element supports vertically joined together in a stacked assembly with each support disposed horizontally,
at least some of each of the supports occupying a particular horizontal position at any one time,
and moving means for vertically moving such some supports out of the horizontal position into the next adjacent horizontal position previously occupied by an adjacent support.

In accord with still another aspect of the invention, there is provided a method of processing a test element, comprising
dispensing an aliquot of patient sample into a selected test element for a particular assay,
pushing the test element with the aliquot onto a support of an incubator, at the first location,
raising or lowering the support from the first location to a second location removed from the first location,
pushing the test element from the second portion directly into a read station,
and detecting the result produced by the patient sample in the test element at the read station.

Accordingly, it is an advantageous feature of the invention that an increased-throughput incubator is provided by linking incubator supports closely together with a flow path in the vertical dimension rather than the horizontal dimension that has been the hallmark of conventional incubators.

It is a related advantageous feature that this is achieved by constructing the incubator in the form of an endless chain conveyor.

Other advantageous features will become apparent in the "Detailed Description" which follows, when read in light of the attached drawings.
FIG. 1 is a fragmentary isometric view of a chain incubator constructed in accordance with the invention, and showing portions of an analyzer with which the incubator is used;
FIG. 2 is an enlarged, partially exploded fragmentary isometric view similar to that of FIG. 1, illustrating further detail;
FIG. 3 is an exploded isometric view of a single member of the chain of the invention, the pin and roller (of FIG. 2) being removed for clarity;
FIG. 4 is a section view of two members of the chain, taken generally through the plane IV-IV-IV-IV of FIG. 2;
FIG. 5 is an elevational view in section of the assembled member of FIG. 3; and
FIG. 6 is a fragmentary elevational view in section of the insulated enclosure of the incubator.

The invention is described in connection with certain preferred embodiments, in which the chain incubator, or conveyor, is driven by a tooth sprocket and idler sprocket of a particular design, disposed directly one above the other, wherein each test element support of the incubator has a cover of a particular design held in place by a torsion bar spring clip, the incubator being used with two separate pusher blades, one to load and one to unload, at two different locations. In addition, the incubator of the invention is useful regardless of the design of the drive and idler sprockets and of their relative positions; regardless of the shape or use of a cover and the kind of spring holding the cover in place; and regardless of the number, position or kind of pusher blades used to load and unload the incubator.

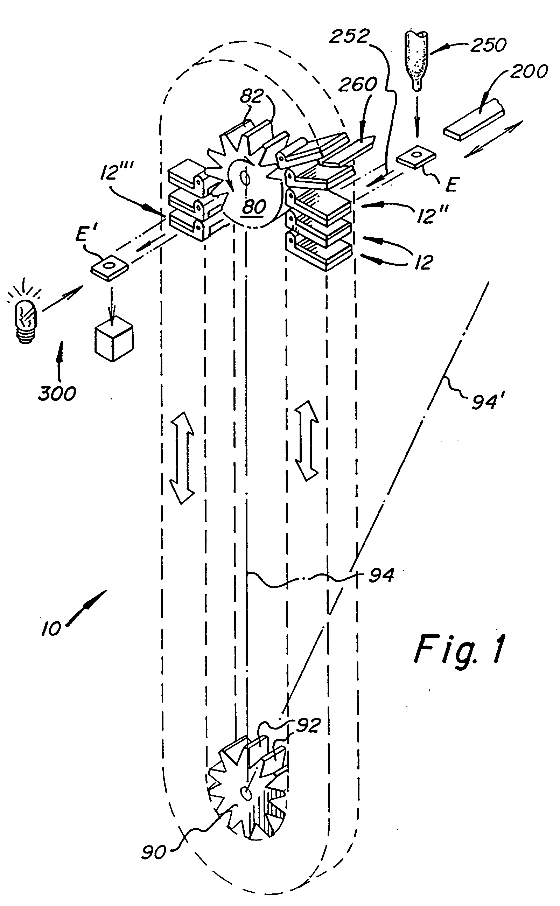

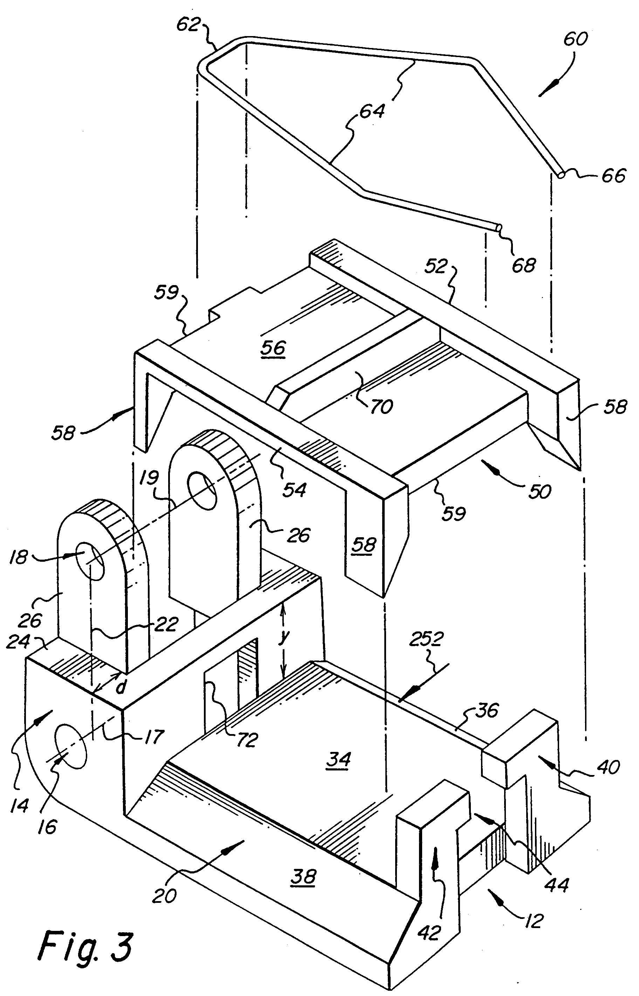

As shown in FIG. 1, the incubator or conveyor of the invention comprises an endless chain 10 made up of a plurality of members 12, each having two portions, FIG. 3, a link portion 14 extending between two pivot points 16 and 18 defined as pivot apertures extending along axes 12 and 19, respectively, and a test element support portion 20 extending generally perpendicularly from a line 22 drawn between the pivot axes of points 16 and 18. A cover 50 is biased onto support portion 20 by a spring 60 as described hereinafter.

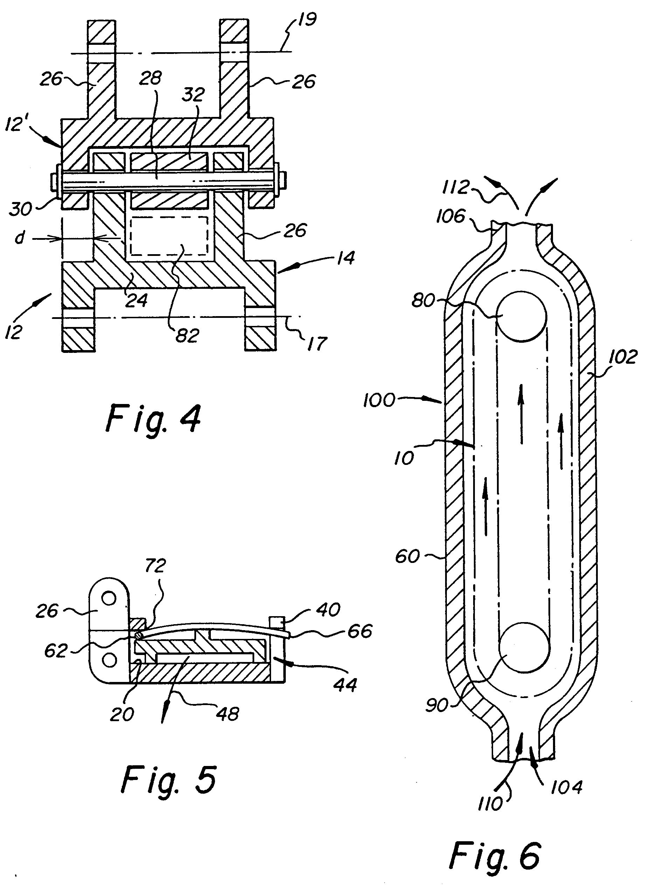

Preferably, link portion 14 comprises a shoulder 24 through which the paired apertures of axis 17 extend, and a pair of ears 26 rising from the shoulder. Ears 26 are each moved inwardly a distance "d", to define an offset for receiving the shoulder of the next adjacent member 12', FIG. 4. The paired apertures of pivot axis 19 are provided in ears 26. Pivot pins 28 connecting members 12 and 12', FIG. 4, are then inserted through the apertures of pivot axes 17 and 19 to pivotally connect the chain together. Retaining rings 30 hold pins 28 in place, as is conventional. A roller 32 is disposed on pins 28 to give rolling contact with the sprockets, described below. The result of this construction is to join a pivot point of one support 20 at one of the ends of link 14 of that support, to the pivot point of an adjacent support 20 at the other of the ends of its link 14.

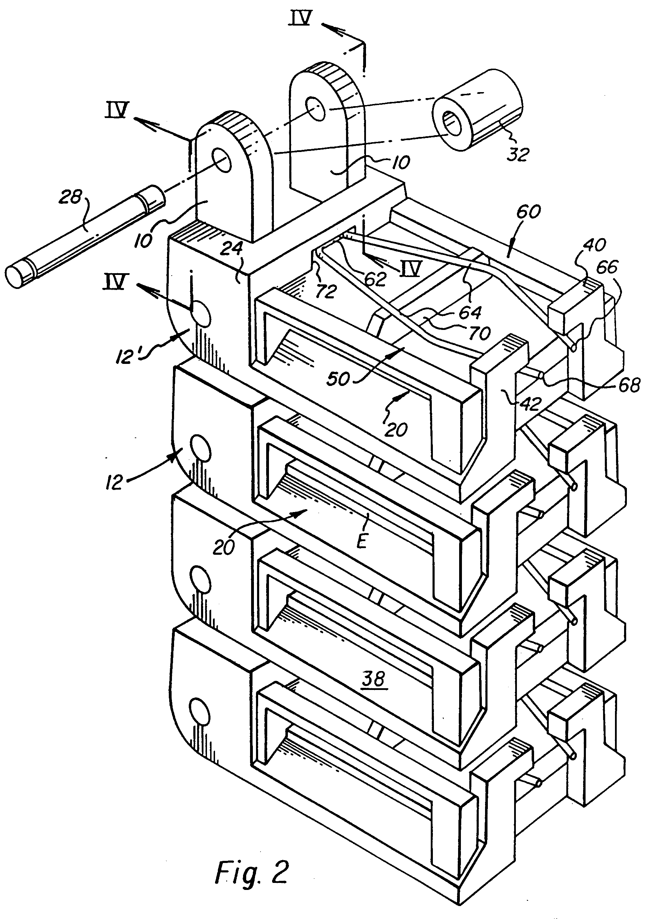

Preferably, support portion 20, FIG. 3, is disposed a distance "y" below shoulder 24 to receive both cover 50 and a test element E between cover 50 and support portion 20, FIG. 2. Most preferably, FIG. 3, support portion 20 comprises surface 34 that extends generally horizontally except when members 12 and 12' move around the sprockets, and opposite camming edges 36 and 38 that act to guide a test element onto or off of surface 34. Additionally, as shown more clearly for member 12 in FIG. 2, when a test element E is in place, edges 36 and 38 project beyond the outermost edge of element E, thus providing good thermal contact between support portion 20 and the heated air flowing around the chain incubator, FIG. 6. Retaining fingers 40, 42 extend, FIG. 3, upward from surface 34 to help confine cover 50. An air flow gap 44 is provided under and between fingers 40, 42.

Representative examples for the dimensions "d" and "y" discussed above are, 0.3 cm and 0.5 cm, respectively.

For a similar reason, FIG. 3, cover 50 is constructed to be relatively open at opposite edges 52, 54. That is, cover 50 comprises a top panel 56 with depending legs 58 that leave open the front and back faces 59 as well as at edges 52 and 54. This open construction of cover 50 as it sits on support portion 20, FIG. 5, along with the air flow through gap 44, provides for rapid air flow, as shown by arrow 48, when no test element is present, a decided advantage in removing residual gases possibly produced by the last test element to have been supported.

To releasibly clamp or bias cover 50 in place onto support portion 20, a spring 60 is provided, preferably in the form of a U-shaped torsion bar. That is, spring 60 has a base 62 and legs 64 which extend from base 62 to terminate in ends 66, 68. Legs 64 are slightly bowed so as to extend over a biasing ridge 70 provided in panel 56. As is more clearly shown in FIGS. 2 and 5, base 62 fits into the top part of aperture 72 provided for that purpose in shoulder 24 above support portion 20, while ends 66, 68 slip under and are held by fingers 40, 42.

It will be readily apparent from the preceding that an advantage of the invention is that all of members 12 (and 12') are substantially identical to each in construction, and thus are interchangeable. Furthermore, the length of the chain is greatly variable. Because of the close stacking of the members 12 together, with a minimum footprint, the throughput is greatly increased for just a single incubator. Still further, the reduced footprint means that more than one incubator can be used per analyzer, to further increase throughput.

To move the endless incubator or conveyor so created as described above, and preferably in vertical directions (up and down), a drive sprocket 80 and an idler sprocket 90 are provided, FIG. 1, that engage link portions 14 in members 12 and 12' of incubator 10. Such sprockets are conventional, and comprise a toothed wheel the teeth 82 and 92, respectively, of which are shaped and spaced so as to fit within the space provided shown in phantom, FIG. 4, between roller 32 and shoulder 24. Sprocket 80 is driven by any conventional motor and drive shaft (not shown), and sprocket 90 is journaled to freely rotate (not shown). To minimize the foot print of the incubator, sprocket 80 is preferably disposed directly above sprocket 90, FIG. 1, so that a line 94 between them is substantially vertical. Alternatively, however, the sprockets can be disposed so that they are not vertically aligned, for example, line 94 can be inclined to the vertical in either direction, as suggested by 94'.

Any incubator needs a source of thermal control, and this is achieved for incubator 10 preferably by an insulated enclosure 100, FIG. 6. The enclosure comprises a housing 102 completely surrounding chain incubator 10, except for an air inlet 104 and an air exit 106. Inlet 104 is preferably directly below sprocket 90 whereas exit 106 is directly above sprocket 80, so that air flows as indicated by arrows 110, 112. The heating of the air flowing in, arrows 110, is done by any conventional heater, not shown, upstream of incubator 10.

To load and unload incubator 10, FIG. 1, at least one pusher blade 200 is provided, to cooperate with an appropriately positioned aperture (not shown) in the enclosure described above extending around incubator 10. Such a pusher blade can be rigid, as taught for example in US-A-4,512,952, or it can be flexible, as taught for example in US-A-5,330,716. It pushes test element E from a conventional source of test elements, not shown, x to and from a liquid-dispensing station 250 shown schematically, directly into chain incubator, arrow 252, via the opening at edge 52, FIG. 3, provided between cover 50 and support 20. This same pusher blade can then be used at the same location to remove element E after it is incubated, but preferably a second pusher blade 260, FIG. 1, is disposed at a different location, with appropriate slots in the enclosure (not shown) to eject an element E^{'} directly into a read station 300 shown schematically.

The use of the incubator/conveyor of the invention will be readily apparent from the preceding. That is, FIG. 1, drive sprocket 80 is effective to force chain incubator/conveyor 10 to move so that supports 20 extend out generally horizontally, and displace each other vertically, either up or down, depending on the drive direction of sprocket 80. Thus, sprocket 80 and incubator 10 are effective to move, FIG. 2, support 20 of chain member 12, and element E, vertically upward, for example, to occupy the horizontal position previously occupied by support 20 of member 12'.

In sequence, then, an aliquot of patient sample is dispensed at station 250 onto test element E, and that element is then pushed onto support 20 of chain member 12'', under its cover 50. Member 12'' is then raised or lowered by drive sprocket 80 to subsequent locations above or below that currently shown, until it is completely incubated. Then, member 12'' is preferably located at the position shown for member 12''', where blade 260 is activated to push the element, shown as element E', directly into read station 300, where the result produced by the patient sample is detected. (The precise positioning of stations 250 and blade 260 vis-a-vis drive sprocket 80 is arbitrary and depends on the location of other analyzer features, as will be understood.)

## Claims

1. An incubator for a chemical analyzer, comprising:
a plurality of test element supports vertically joined together in a stacked assembly with each support disposed horizontally, the assembly comprising at least a pair of opposed pivot points attached to each of the supports and at least one pivot pin, the pivot pin passing through and joining a pivot point of one support to a pivot point of an adjacent support; and
moving means for moving the stack in a vertical direction.

2. The incubator of claim 1, wherein the supports are linked into an endless chain, and the moving means comprise a pair of sprockets shaped to engage the chain.

3. The incubator of claim 2, further including a pair of ears attached to each of the supports, each ear being spaced from the other to define a link opening, the at least one pivot pin extending through the ears at one of the pivot points, and further including a second pivot extending through the other of the pivot points, wherein the sprockets include teeth spaced apart a distance that fits within the link space and between each of the pivot pins of each of the supports.

4. An incubator for a chemical analyser, comprising:
a plurality of test element supports vertically joined together in a stacked assembly with each support disposed horizontally;
at least some of each of the supports occupying a particular horizontal position at any one time; and
moving means for vertically moving the same support out of the horizontal position into the next adjacent horizontal position previously occupied by an adjacent support.

5. The incubator of any one of claims 1 to 4, further including a read station adjacent the incubator, and a pusher blade for pushing a test element from a support of the incubator directly onto the read station.

6. An incubator for a chemical analyzer, comprising:
a plurality of links pivotally connected to each other at opposite ends by pins to form an endless chain conveyor;
a drive sprocket and an idler sprocket each having teeth spaced apart a distance coinciding with the spacing of the points on the links;
a test element support extending from each of the links; and
a heater for maintaining the platforms at a desired temperature.

7. The incubator of claim 6, wherein the sprockets are disposed relative to each other so that the supports are oriented generally horizontal except when their respective links engage the sprockets.

8. The incubator of claim 7, further including at least one pusher blade for pushing a test element onto or off of each of the platforms through respective ones of the opposite side edges.

9. The incubator of claim 8, further including a second pusher blade positioned separately from the at least one pusher blade, in position for removing from the incubator a test element that is loaded into the incubator by the at least one pusher blade.

10. The incubator of any one of claims 7 to 9, wherein the incubator is confined within an insulated enclosure having an air inlet and an air outlet, and the heater is disposed outside of the enclosure for heating air flowing into the inlet.

11. The incubator of claim 10, wherein the inlet and outlet are aligned with a line extending between the sprockets.

12. The incubator of any one of claims 1 to 11, and further including a cover for each of the supports, wherein preferably each the support and the cover leave exposed opposite side edges of the support.

13. An endless chain conveyor comprising a plurality of links pivotally connected to each other at opposite ends by pins, a drive sprocket and an idler sprocket each having teeth spaced and shaped to engage the links, an article supporting surface projecting from each of the links, for each of the links, a cover movably positioned over each the support and biasing means for removably biasing the cover against the each support, wherein the sprockets are disposed one above the other so that the supports are oriented generally horizontally except when their respective links engage the sprockets.

14. The conveyor of claim 13 wherein the covers, the supports and the biasing means leave exposed opposite side edges of the supports, further including at least one pusher blade for pushing an article onto or off of each of the supports through respective ones of the opposite side edges.

15. The conveyor of claim 15, and further including a second pusher blade positioned separately from the at least one pusher blade, in position for removing an article that is loaded into a support by the at least one pusher blade.

16. The conveyor of any one of claims 13 to 15 further including a heater for maintaining the supports at a desired temperature

17. The conveyor of claim 16, further including an insulated enclosure around the conveyor and having an air inlet and an air outlet, wherein the heater is disposed outside of the enclosure for heating air flowing into the outlet.

18. The conveyor of claim 17, wherein the inlet and the outlet are aligned with a line extending between the sprockets.

19. A method of processing a test element in an analyzer, comprising:
dispensing an aliquot of patient sample onto a selected test element for a particular assay;
pushing the test element with the aliquot onto a support of an incubator, at a first location;
raising or lowering the support from the first location to a second location removed from the first location;
pushing the test element from the second position directly into a read station; and
detecting the result produced by the patient sample in the test element at the read station.

20. The method of claim 19, and further including the step of incubating the test element while on the support, during the raising or lowering step.
